(19) Europäisches Patentamt

European Patent Office

Office européen des brevets

(11) Publication number: **0 209 047 B1**

# EUROPEAN PATENT SPECIFICATION

(45) Date of publication of patent specification: **07.10.92**   (51) Int. Cl.⁵: **G11B 27/19**, **H04N 5/782**

(21) Application number: **86109282.3**

(22) Date of filing: **08.07.86**

(54) **Apparatus for recording and/or reproducing an information signal.**

(30) Priority: **09.07.85 JP 150428/85**

(43) Date of publication of application:
**21.01.87 Bulletin 87/04**

(45) Publication of the grant of the patent:
**07.10.92 Bulletin 92/41**

(84) Designated Contracting States:
**AT CH DE FR GB IT LI NL**

(56) References cited:
**EP-A- 0 093 527**
**DE-A- 3 310 998**
**US-A- 4 286 281**
**US-A- 4 327 382**

**1985 IEEE International Conference on Consumer Electronics, 5-7 June 1985, pages 50-51**

(73) Proprietor: **SONY CORPORATION**
**7-35 Kitashinagawa 6-chome Shinagawa-ku Tokyo 141(JP)**

(72) Inventor: **Takahashi, Takao**
**c/o Sony Corporation 73-5, Kitashinagawa 6-chome**
**Shinagawa-ku Tokyo(JP)**

Inventor: **Okada, Hiroshi**
**c/o Sony Corporation 73-5, Kitashinagawa 6-chome**
**Shinagawa-ku Tokyo(JP)**
Inventor: **Kikuchi, Akihiro**
**c/o Sony Corporation 73-5, Kitashinagawa 6-chome**
**Shinagawa-ku Tokyo(JP)**
Inventor: **Kishitaka, Yuriko**
**c/o Sony Corporation 73-5, Kitashinagawa 6-chome**
**Shinagawa-ku Tokyo(JP)**

(74) Representative: **Schmidt-Evers, Jürgen, Dipl.-Ing. et al**
**Patentanwälte Dipl.-Ing. H. Mitscherlich Dipl.-Ing. K. Gunschmann Dipl.-Ing. Dr.rer.nat. W. Körber Dipl.-Ing. J. Schmidt-Evers Dipl.-Ing. W. Melzer Dipl.-Phys.Dr.rer.na t. R. Schulz, Postfach 260132, D-8000 München 26(DE)**

# Description

## BACKGROUND OF THE INVENTION

### Field of the Invention

This invention relates generally to an apparatus for recording and/or reproducing a PCM (pulse code modulated) audio signal by using a rotary head and particularly to a technology for recording an index signal such as a signal indicative of a starting point of a recorded event on a track and the like upon the so-called after recording mode and for erasing the same.

### Description of the Prior Art

According to the international standardization of the so-called 8 mm video tape recorder (VTR), an audio signal is frequecy-modulated, mixed with a color video signal and then recorded under the state that the audio signal can be separated from the color video signal in a frequency standpoint. In addition to such recording mode, there can be employed an optional recording mode in which an audio signal is pulse-code-modulated and then recorded in a separate area on one track which is formed by both the PCM audio signal and the color video signal.

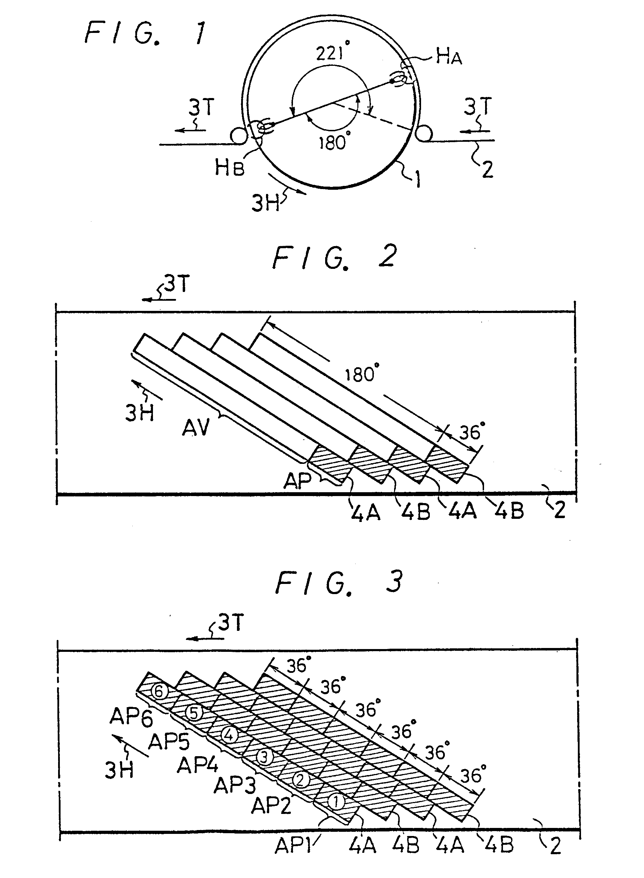

Fig. 1 is a representation showing one example of a rotary head assembly used in the 8 mm video tape recorder and Fig. 2 is a diagram showing the tape format thereof.

Referring to Fig. 1, reference numerals HA and HB designate recording and reproducing rotary heads, respectively. These rotary magnetic heads HA and HB are made different from each other in an azimuth angle of the operating gap and are mounted on a rotary drum 1 with an angular distance of 180° therebetween. These rotary magnetic heads HA and HB are rotated at a frame frequency (30 Hz) in the direction shown by an arrow 3H under the state that they are somewhat protruded from the periphery of the rotary drum 1. A magnetic tape 2 is wrapped around the periphery of the rotary drum 1 over an angular range of 221° and is transported at a constant speed in the direction shown by the arrow 3T.

Accordingly, on the tape 2, there are alternately recorded tracks 4A and 4B each having a length of 221° by the rotary magnetic heads HA and HB as shown in Fig. 2, thus a signal being recorded. Of the tracks 4A and 4B, on an area AP having an angular range of about 36° (including a margin to record a PCM audio signal in the after-recording mode and a guard band area) from a time point at which the rotary heads HA and HB start scanning the tape 2, there is recorded an audio signal associating with one field period of the video signal, which is pulse-code-modulated and whose time base is compressed. On the succeeding area AV having an angular range of 180° in a rotation angle of the rotary head, there are recorded a color video signal and an FM (frequency-modulated) audio signal of one field period, and further a tracking signal. The remaining area having an angular range of 5° in a rotation angle of the rotary head is assigned as a spare area through which the rotary head is detached from the magnetic tape 2.

As mentioned above, the 8 mm video tape recorder is capable of recording and/or reproducing a PCM audio signal. This particular feature of the 8 mm video tape recorder is effectively utllized in a technology which is disposed in U.S. Patent NO. 4,542,419 issued on Sep. 17, 1985. According to this technology, the recording area AV of the color video signal is used also as the recording area of the PCM audio signal and the 8 mm video tape recorder can be exclusively used as a PCM audio signal recording and/or reproducing apparatus.

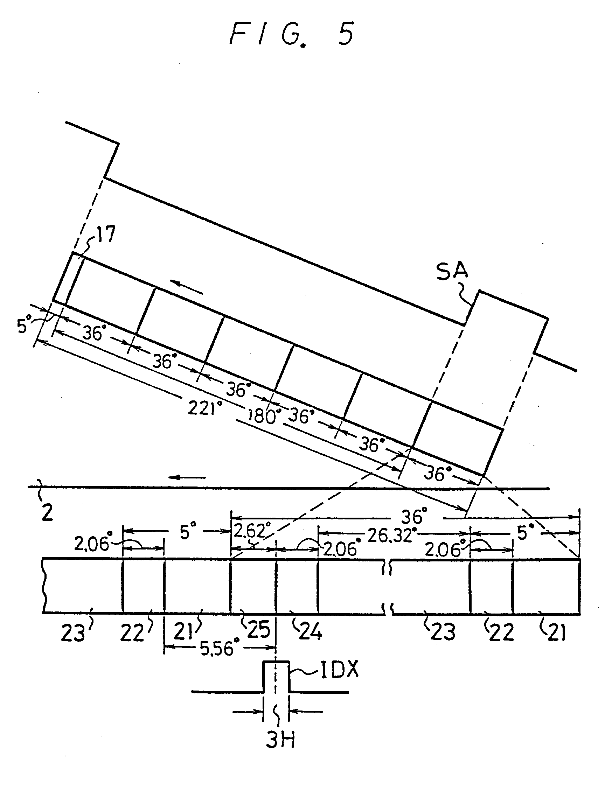

Specifically, since the video signal recording area AV having the angular range of 180° is long five times the PCM audio signal recording area AP having the angular range of 36°, the video signal recording area AV is divided equally by five to thereby form, as shown in Fig. 3, 5 segment track areas AP2 to AP6 shown by ② to ⑥ in addition to the original PCM audio signal recording area AP shown by ① per one track 4A or 4B. Then, on each of these 6 segment track areas AP1 to AP6, there is recorded a PCM audio signal of one channel, that is, an audio signal of one field period which is pulse-code-modulated and time-compressed, and then it is reproduced therefrom.

Accordingly, in this case, since the audio signal of one channel can be recorded and/or reproduced at every one unit area, the audio signal of 6 channels can be recorded and/or reproduced, providing a recording time (capacity) 6 times as long as the prior art recording time (hereinafter this technology will be referred to as a multi-PCM mode technology).

In the case of the multi-PCM mode, a PCM audio signal processor may be a signal processor capable of processing a signal of one channel used in the prior art 8 mm vide tape recorder because the PCM audio signal is recorded and/or reproduced at the unit of every segment track area.

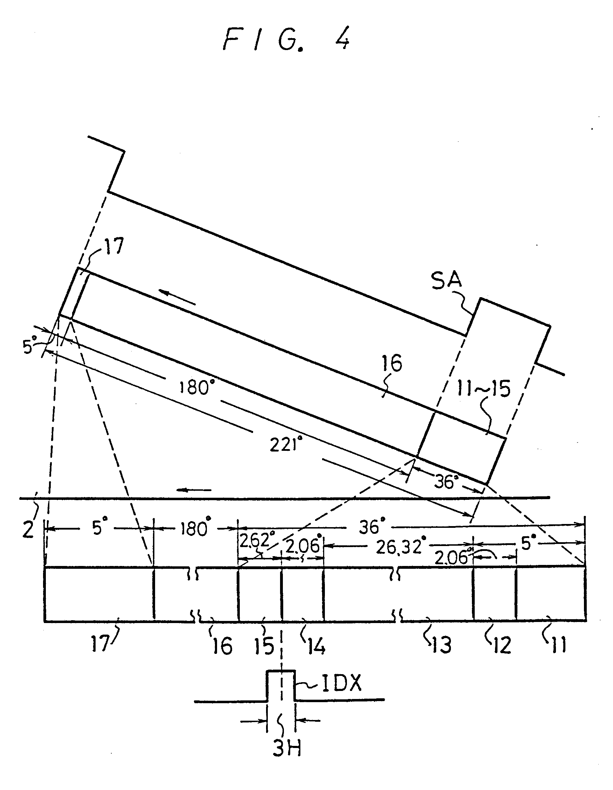

Fig. 4 illustrates the track format of the above mentioned 8 mm video tape recorder more fully.

Referring to Fig. 4, from the right-hand side at which the rotary head begins to contact with the magnetic tape 2, at the starting point of the track, there is provided a tracing start area 11 of 5° in a rotation angle of the rotary head. At the rear portion of the tracing start area 11, a period having an angular range of 2.06° (corresponding to 3H of the video signal where H is the horizontal period) is assigned as a preamble area 12 which will become a clock run-in area synchronized with the succeeding PCM data. Next to the preamble area 12, there is provided a PCM data recording area 13 having an angular range of 26.32° in which a time-base-compressed PCM audio signal is recorded. A postamble area 14 having an angular range of 2.06° (3H) in a rotation angle of the rotary head follows the PCM data recording area 13 so as to be used as a back margin area to cope with the displacement of the recording position when the recording is carried out in the so-called after-recording mode. A next area having an angular range of 2.62° in a rotation angle of the rotary head is assigned as a guard band area 15 for the video signal area and the PCM data area. Next to the guard band area 15, there is provided a recording area 16 having an angular range of 180° in a rotation angle of the rotary head in which the video signal of one field period is recorded. Finally, there is provided a head detaching area 17 having an angular range of 5° in a rotation angle of the rotary head through which the rotary head is detached from the magnetic tape 2 freely.

Fig. 5 illustrates a track format used in the multi-PCM mode. Considering one segment track area for the PCM audio signal, it is perfectly the same as the PCM audio area of the track format used in the normal 8 mm video tape recorder as shown in Fig. 4. So, in this one segment track area there are formed a tracing start area 21, a preamble area 22, a PCM data area 23, a postamble area 24 and a guard band area 25. This format is assigned to each of the segment track areas AP1 to AP6.

Generally, the PCM data is recorded on the tape under the state that a data having a level "1" or "0" is modulated. In the 8 mm video tape recorder, the data having a level of, for example, "1" is modulated to a signal having a frequency of 5.8 MHz and then recorded, while the data having a level of "0" is modulated to a signal having a frequency of 2.9 MHz and then recorded. In the prior art, only the data of "1", that is, the signal having the frequency of 5.8 MHz is recorded in all of the preamble area 12 or 22 and the postamble area 14 or 24. This prior art technology is disclosed in U.S. Patent NO. 4,551,771, issued on Nov. 5, 1985.

By the way, as a method for accessing (random access) a starting point of a recorded event in the 8 mm video tape recorder mode and the multi-PCM mode, the assignee of the present application has previously proposed (see U.S. Patent Application, Serial NO. 838,626, filed on March 11, 1986) such a method in which an index signal is recorded in, for example, the postamble area 14 or 24 of each track format as mentioned above and this index signal is used to access each starting point of the recorded events on the tape.

According to the previously proposed technology as described above, the index signal can be recorded and/or reproduced by the rotary head and there is no need to provide recording and reproducing heads of stationary type therefor. Further, after the recording of the PCM data is ended, the index signal can be inserted into and/or erased from the postamble area with ease in the after-recording mode.

By the way, in order to record the index signal in the postamble area (strictly, the index signal is recorded across the postamble area 14 and the guard band area 15 with a code length of about 3H where H is the horizontal interval as shown by an IDX in Fig. 4) and/or erase the same therefrom, it is necessary to form an area specifying signal which specifies this postamble area as an area of an index signal, whereby the recording and/or erasing of the index signal must be carried out within the area specified by the area specifying signal.

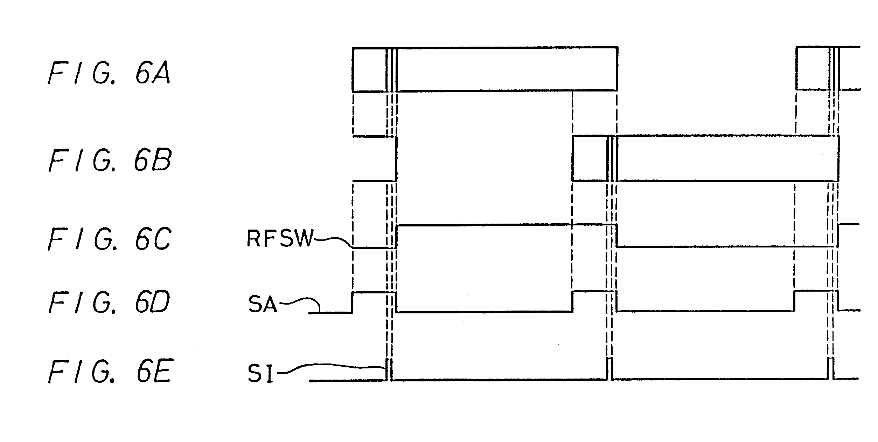

Such index area specifying signal can be generated from the switching signal RFSW which changes-over the two rotary heads HA and HB. In other words, the switching pulse RFSW is generated from a pulse PG indicating the absolute rotary phases of the rotary heads HA and HB and derived from a pulse generator (provided in association with a drum motor though not shown). The leading and trailing edges of the switching pulse RFSW which become the switching time points of the rotary heads HA and HB are located at times within the guard band area 15 on the track format. Figs. 6A to 6D illustrate respectively relationships among this switching signal RFSW, the PCM area signal SA indicative of each PCM segment track area and the recording tracks formed by the two rotary heads HA and HB. In the multi-PCM mode, both the switching signal RFSW and the PCM area signal SA are sequentially phase-shifted by a rotation angle of 36° each relative to the absolute rotary phase (reference phase for the drum phase servo) with the phase relationship shown in Figs. 6C and 6D, respectively. Accordingly, if, for example, a delaying monostable multivibrator is triggered at the leading and trailing edges of the switching signal RFSW with the proper timing, it is possible to generate an index area specifying signal SI shown in Fig. 6E.

By the way, in the case of the 8 mm video tape recorder, considering the jitter of a VTR driving system, the ununiform mechanical arrangement of the respective VTRs and the influence of the slacking and contracting of the magnetic tape, it is allowable that each data is formed on the track pattern of the tape at the position with the displacement of ± 1.5H. Such tolerable error of ±1.5H, even if it is small or large, is generally determined by a rotary head type recording and/or reproducing apparatus.

However, when there arises a timing error because of the above mentioned influence, if after the PCM data and the video signal are recorded the index signal is recorded in the index area of the recording track or erased therefrom in the after-recording mode, when the index area specifying signal is generated from the switching signal RFSW as described above, the index area is displaced by the displacement amount corresponding to the timing error relative to the recording track. Thus, the index signal is recorded in and/or erased from a part of the PCM audio data area or the video signal area with the result that the PCM audio data or the video signal is erased by that amount.

From "1985 International Conference On Consumer Electronics", June 5-7, 1985, pp. 50, 51, a multi-track PCM audio utilizing a 8mm video system is known which uses rotating video heads for recording PCM audio signals and four-frequency pilot signals in a slant recording area of one of six tracks arranged parallel to the tape direction and separated from each other. The tape direction can be reversed. An ID word is recorded in PCM data which serves for discriminating the tape transportation direction in the playback mode. The location of the ID word in the data format is not mentioned.

EP-A-93 527 describes sequential data block address processing circuits which derive address signals in dependence on incoming data formed by sequential blocks of data each including a block address.

DE-A-33 10 998 describes a video tape recorder with slant tracks using an ID signal preceding the PCM data words.

## OBJECTS AND SUMMARY OF THE INVENTION

Accordingly, it is an object of this invention to provide an improved apparatus for recording and/or reproducing an information signal which can remove the above mentioned defects encountered with the prior art.

It is another object of this invention to provide an improved apparatus for recording and/or reproducing an information signal which can access a starting point of a recorded event on a tape very easily and positively, and in which even when a recording track is displaced in the longitudinal direction due to a skew, a jitter, an adjustment error or the like, a position determined to a PCM data track can always be specified as an index signal area.

It is still further object of this invention to provide an improved apparatus for recording and/or reproducing an information signal which can prevent a PCM data from being erased by an index signal because of the displacement in the longitudinal direction of the track timing.

The invention is defined in claim 1.

These and other objects, features and advantages of the present invention will become apparent from the following detailed description of the preferred embodiment taken in conjunction with the accompanying drawings, throughout which like reference numerals designate like elements and parts.

## BRIEF DESCRIPTION OF THE DRAWINGS

Fig. 1 is a schematic diagram showing one example of a rotary head assembly of a recording and/or reproducing apparatus to which the present invention is applied;

Figs. 2 and 3 are schematic diagrams respectively showing recording track patterns thereof;

Figs. 4 and 5 are schematic diagrams respectively used to explain practical track formats used in this invention;

Figs. 6A to 6E are respectively systematic diagrams used to explain a relationship between the switching of a rotary head and an index area;

Fig. 7 is a schematic diagram useful for explaining a structure of a PCM data;

Fig. 8 is a schematic block diagram showing one embodiment of an apparatus for recording and/or reproducing an information signal according to this invention; and

Figs. 9A to 9L are timing charts respectively used to explain the generation of an index area signal.

## DESCRIPTION OF THE PREFERRED EMBODIMENT

Firstly, a principle of this invention will be described.

A PCM data of one track is generally formed such that an information signal such as an audio signal and the like having a constant time period is divided into a plurality of blocks and a block synchronizing signal and a block address signal are added to every one of the divided blocks.

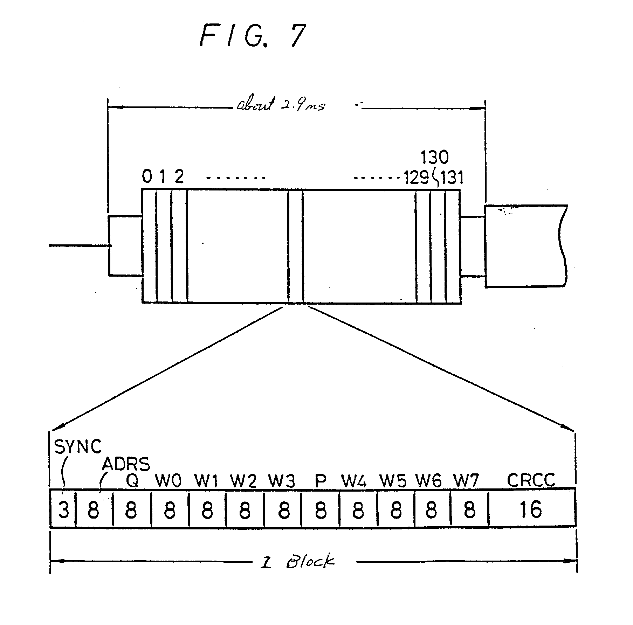

In the PCM audio data of the 8 mm video tape recorder, as shown in Fig. 7, a data of one block is formed of 132 blocks and one block is formed of a block synchronizing signal SYNC of 3 bits, a block address word ADRS of 8 bits, error correction parity words P and Q, audio data words W0 to W7 of 8 words, and an error detection CRC (cyclic redundancy check) code of 16 bits. The CRC code is generated for the address word ADRS up to the data word W7 (see European Patent Laid-open publication, NO. 94671, published on Nov. 23, 1983 corresponding to U.S. Patent Application, Serial NO. 494,325, filed on May 13, 1983).

Then, the address word ADRS indicates the block number of the block data of one track amount.

Accordingly, each block address data indicates an absolute position of the PCM audio track recorded on the tape. The content of this address data is not changed at all even when the position of the track pattern of each data on the tape is displaced from the pre-determined position.

Therefore, according to this invention, the block address data in this PCM data is detected and then the index area specifying signal is formed on the basis of this detected address.

Since the index area specifying signal is formed from the address signal contained in the PCM data of the track in and/or from which the index signal is inserted or erased, it is possible to specify the boarder areas between the postamble area 14 or 24 and the guard band area 15 or 25 as the index area without according to the track formats shown in Figs. 4 and 5, that is, without lying over the PCM data area 13 or 23 and the video signal area 16.

Referring now to the drawings, an embodiment of an apparatus for recording and/or reproducing an information signal according to the present invention will hereinafter be described in detail.

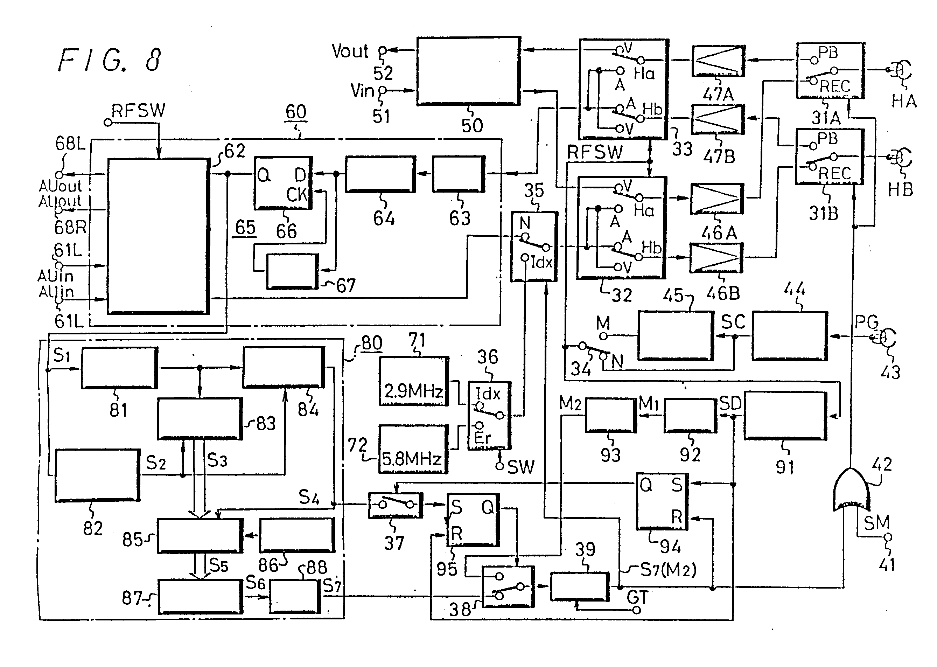

Fig. 8 is a systematic block diagram showing one embodiment of the present invention. In this embodiment, the present invention is applied to the above mentioned 8 mm video tape recorder.

Referring to Fig. 8, reference numerals 31A and 31B respectively designate recording and/or reproducing change-over switching circuits to which a recording and/or reproducing switching signal SM from a terminal 41 is applied through an OR gate 42. Each of the switching circuits 31A and 31B is connected to the recording side REC upon the recording mode and is changed in position to the playback side PB upon the reproducing mode.

Rotary head change-over switching circuits 32 and 33 are adapted to be alternately connected to the illustrated position and the position opposite to the illustrated position at every 1/2 rotation period by the switching signal RFSW.

A switch 34 is provided to switch the switching signal RFSW upon the normal mode and upon the multi-PCM mode. That is, upon the normal mode, the movable contact of this switch 34 is connected to the N side. At that time, a pulse PG having a frequency of 30 Hz generated from a pulse generator 43 and indicative of the absolute phases of the rotary heads HA and HB is supplied to a switching signal generating circuit 44 from which a square wave signal SC having a duty ratio of 50% is derived. This square wave signal SC is supplied through the switch 34 to the switching circuits 32 and 33 as the switching signal RFSW.

Upon the multi-PCM mode, the movable contact of this switch 34 is connected to the M side. At that time, the square wave signal SC from the switching signal generating circuit 44 is supplied to a phase shifter circuit 45 by which in response to the segment track area specified, the square wave signal SC is phase-shifted by $36° \times (n - 1)$ (n is an integer corresponding to the segment track area number and, for example, n = 1 for the segment track area AP1, n = 2 for the segment track area AP2, ... n = 6 for the segment track area AP6). The phase-shifted signal therefrom is supplied through the switch 34 to the switching circuits 32 and 33 as the switching signal RFSW. This switching signal RFSW is also supplied to a PCM audio signal processor 62 which generates a PCM area signal indicative of the specified segment track area.

The normal recording mode will be described first.

An input video signal Vin applied to an input terminal 51 is supplied to a video signal system 50 in which it is processed. The output signal from the video signal system 50 is then supplied to the switching circuit 32.

While this switching circuit 32 is alternately switched by the switching signal RFSW at every half rotation of the rotary head, a drum phase servo taking the pulse PG as a reference phase is applied to the rotary heads HA and HB so that when the rotary head HA scans the area AV described before in connection with Fig. 4, the recording video signal is supplied through a recording amplifier 46A and the switching circuit 31A to the rotary head HA and thereby recorded on the area AV of the track 4A. In like manner, when the rotary head HB scans the area AV, the recording video signal is supplied through a recording amplifier 46B and the switching circuit 31B to the rotary head HB and thereby recorded on the area AV of the track 4B.

Left and right channel audio signals AUin applied to input terminals 61L and 61R are both supplied to the PCM audio signal processing circuit 62 of a PCM signal system 60 in which they are processed as PCM data.

In other words, the audio signal is digitized, the digital signal is divided into 132 blocks at every one field period thereof, the parity words P and Q each of which is an error correction code are generated and the CRC (cyclic redundancy check) code is generated for each block. Then, by the PCM area signal formed on the basis of the switching signal RFSW, the data of one field period is time-base-compressed to about 1/5, a block synchronizing signal SYNC and a block address signal ADRS are added to each block, one block is formed as a data series shown in Fig. 7 and this block is read out. The PCM data thus read is modulated to a signal having a frequency of 5.8 MHz if the level of the data is "1" and to a signal having a frequency of 2.9 MHz if the level thereof is "0". The modulated signal is supplied through a switching circuit 35, which will be described later, to the switching circuit 32, whereby when in accordance with the switching of the switching circuit 32 by the switching signal RFSW, the signal is recorded on the area AP of the track 4A by the rotary head HA and on the area AP of the track 4B by the rotary head HB as shown in Fig. 2, respectively.

In the multi-PCM mode, the movable contact of the switch 34 is connected to the M side and hence the phase shifter circuit 45 phase-shifts the signal SC to generate a signal whose phase is shifted by an integer multiple of 36° relative to the signal SC in response to the specified PCM area as the head switching signal RFSW from which the PCM area signal is generated. Accordingly, the PCM audio signal is recorded on one specified area of the segment track areas AP1 to AP6 shown in Fig. 5.

The reproducing mode will be described next. Also in this playback mode, the rotary phase of the rotary drum is servo-controlled on the basis of the pulse signal PG.

In the case of the 8 mm video tape recorder, though not shown, the pilot signals of so-called 4 frequency-system are periodically recorded on the tracks 4A and 4B so that upon reproducing the tracking servo is effected by using the 4 frequency-system pilot signals.

In the playback mode, the reproduced signal outputs from the rotary heads HA and HB are respectively supplied through playback amplifiers 47A and 47B to the switching circuit 33. When this switching circuit 33 is changed in position by the switching signal RFSW, the video signal from the area AV is supplied to the video signal system 50 and the PCM data from the area AP is supplied to the PCM signal system 60, respectively.

In the video signal system 50, the video signal is demodulated and then delivered to an output terminal 52 as an ouput Vout.

On the other hand, in the PCM signal system 60, the reproduced signal is supplied through a playback equalizer circuit 63 and a limiter circuit 64 to a bit synchronizing circuit 65. This bit synchronizing circuit 65 is formed of a D-type flip-flop circuit 66 and a PLL (phase locked loop) circuit 67. From the D-type flip-flop circuit 66, there is derived the data having a level "1" or "0" modulated as mentioned before. The resulting data is supplied to the PCM audio signal processor 62 in which it is error-detected, error-corrected and so on and thereafter it is re-converted to left and right channel analog audio signals. These analog audio signals are developed at output terminals 68L and 68R.

The switching circuit 35 is connected to the position (Idx side) opposite to the illustrated position (N side) in the index area. Further, a switching circuit 36 is adapted to selectively switch the index signal and the erasing signal and is changed in position to terminals Idx and Er by the switching signal SW upon recording (inserting) mode and erasing mode. In the case of the illustrated example, as the index signal, there is used a single tone signal having a frequency of 2.9 MHz. Reference numeral 71 designates an oscillator which generates the index signal having the frequency of 2.9 MHz. As the erasing signal, there is used a single tone signal having a frequency of 5.8 MHz. Reference numeral 72 designates an oscillator from which the erasing signal having the frequency of 5.8 MHz is derived. Reference numeral 80 designates an index area specifying signal generating circuit.

While the apparatus is placed in the playback mode to play back the recorded signal, a new index signal is written in a portion between the postamble area 14 or 24 and the guard band area 15 or 25 or the index signal is erased, the index area specifying signal is generated in the following fashion.

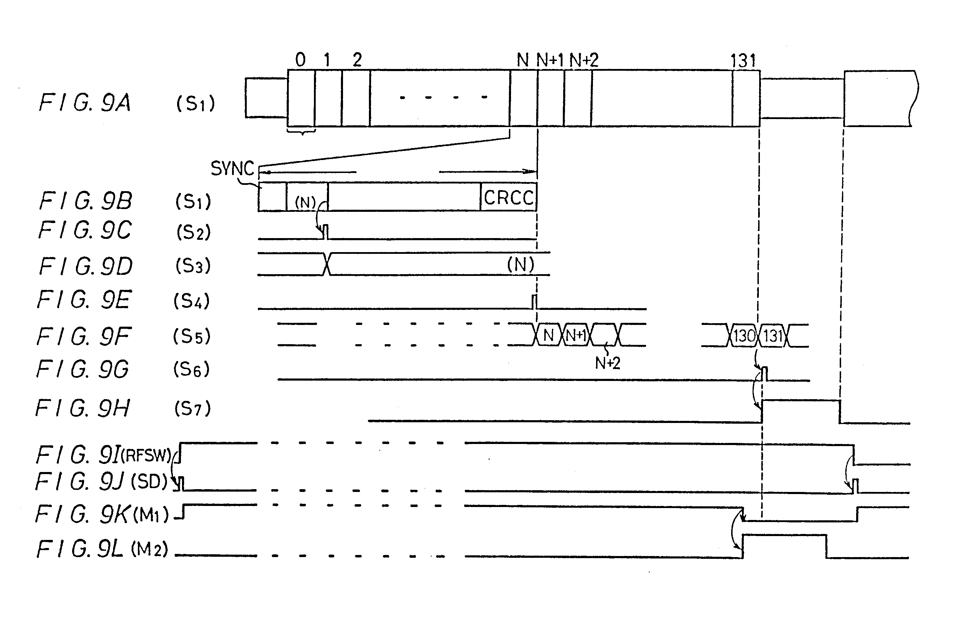

A reproduced data S1 (Figs. 9A and 9B) bit-synchronized from the D-type flip-flop circuit 66 in the PCM signal system 60 is supplied to a demodulating circuit 81 in the generating circuit 80 and also to a block synchronizing signal detecting circuit 82. When the block synchronizing signal SYNC is detected in this block synchronizing signal detecting circuit 82, this detecting circuit 82 generates a latch pulse S2 (Fig. 9C) at a time point of the last bit of the address data ADRS demodulated by the demodulating circuit 81. Accordingly, the address data ADRS of 8 bits is latched in a latch circuit 83 by the latch pulse S2. A latched output S3 (Fig. 9D) therefrom is supplied to a preset terminal of a counter 85.

The data demodulated by the demodulator 81 is also supplied to an error detection circuit 84 in which an error is detected at every block unit by using a CRC code. Since this CRC code is generated for the words including the address data ADRS upon recording, if the address data ADRS has an error, such error of the address data ADRS is detected.

The pulse S2 from the block synchronizing signal detecting circuit 82 is supplied to this error detection circuit 84 as a calculation starting pulse and thereby the calculation for the error detection is carried out. When the absence of error is detected as a result of detection, the error detection circuit 84 generates a pulse S4 (Fig. 9E). The counter 85 is loaded by this pulse S4 and the address value from the latch circuit 83 is preset in this counter 85.

To this counter 85, there is supplied a clock pulse of one block period from a clock generator 86. Accordingly, if the counter 85 is loaded once and then preset, even when the following data are all erroneous, the counter 85 increments from its preset value at every data block. Needless to say, if the data block does not contain any error, the pulse S4 is generated from the error detection circuit 84 at every block so that, each time, the address data ADRS is preset to this counter 85. At that time, the clock pulse is neglected.

A counted value S5 (Fig. 9F) of this counter 85 is supplied to a decoder 87. This decoder 87 detects the fact that the counted value of the counter 85 becomes the last address of the data block, that is, the address 131 and then generates a detection pulse S6 (Fig. 9G).

A monostable multivibrator 88 is triggered by this detection pulse S6 to thereby generate an index area signal S7 (Fig. 9H).

Alternatively, when the counted value of the counter 85 does not become "131" but becomes, for example, "133" (keeping a room), the decoder 87 may generate the detection pulse S6.

The thus obtained index area signal S7 is supplied to the switching circuit 35 through a switching circuit 38 and a gate circuit 39 which will be described later so that this switching circuit 35 is changed in position from the side of the PCM audio signal processor 62 to the side of the switching circuit 36. At the same time, the area signal S7 passed through the gate circuit 39 is supplied through the OR gate 42 to the recording and/or reproducing change-over switching circuits 31A and 31B with the result that during the index area period, these switching circuits 31A and 31B are connected to the recording side terminal REC, respectively.

Accordingly, when the index signal is inserted (written) and the switching circuit 36 is connected to the illustrated position, the index signal having the frequency of 2.9 MHz is recorded on the track at the portion between the postamble interval and the guard band interval specified by the area signal S7. When in the erasing mode the switching circuit 36 is connected to the position opposite to the illustrated position, the erasing signal having the frequency of 5.8 MHz is written during the period specified by the index area signal S7 and thereby the preceding index signal is erased.

The gate circuit 39 controls the insertion time and the erasing time. When the gate circuit 39 is opened by a control signal GT over several 100s tracks, for example, during a time period of 3 to 10 seconds, the index signal is inserted or erased. This control signal GT may be generated automatically or manually in response to the modes of the VTR.

In this embodiment, when the inserting or erasing mode of the index signal is carried out in the recording mode or upon playback mode, even if the correct PCM data is not obtained (including a case where no PCM data exists), the index area signal can be obtained.

In that case, the index area signal is formed from the switching signal RFSW. Accordingly, the switching signal RFSW (Fig. 9I) from the switching circuit 34 is supplied to a changing point detecting circuit 91 in which the leading and trailing edges of the signal RFSW are detected. Then, a monostable multivibrator 92 is triggered by a resulting detection pulse SD (Fig. 9J) to thereby generate a pulse M1 (Fig. 9K) which is delayed with a delay time corresponding to a time period from the head switching point up to a time point a little before the starting position of the postamble portion 14 or 24. A monostable multivibrator 93 is triggered by this pulse M1 to thereby generate an index area signal M2 (Fig. 9L). This index area signal M2 is supplied to another input terminal of the switching circuit 38. The output pulse SD from the changing point detecting circuit 91 is also supplied to a set terminal of an SR flip-flop circuit 94 and to a reset terminal of an SR flip-flop circuit 95. Accordingly, the Q output of this flip-flop circuit 94 always becomes "1" from the head switching time point so that a switching circuit 37 is turned on. Then, the pulse S4 from the error detection circuit 84 is supplied through this switching circuit 37 to the set terminal of the SR flip-flop circuit 95. Accordingly, when no PCM data exists and the error detection circuit 84 does not generate the pulse S4, the Q output of the SR flip-flop circuit 95 becomes "0" so that the switching circuit 38 is connected to the position opposite to the illustrated position, thus instead of the signal S7, the signal M2 being supplied through the gate circuit 39 to the switching circuit 35.

When the PCM data exists and the pulse S4 is generated from the error detection circuit 84, the SR flip-flop circuit 95 is set and thus the Q output thereof becomes "1" so that the switching circuit 38 is connected to the illustrated position. Accordingly, the signal S7 is supplied to the switching circuit 35 as the index area signal.

In both cases, the flip-flop circuit 94 is reset by the signal S7 or M2 passed through the gate circuit 39 and the Q output thereof becomes "0" with the result that the switching circuit 37 is turned off.

Accordingly, in the normal recording mode, the signal M2 is always obtained as the index area signal. When the index signal is desired to be written, the signal having the frequency of 2.9 MHz is recorded, while in other case, the postamble signal having the frequency of 5.8 MHz is recorded. In this recording mode, generally the gate circuit 39 is always opened, while it is closed by a time length (3 to 10 seconds) during which the above mentioned index signal is written.

Also in the multi-PCM mode, by changing-over the switch 34, it is possible to erase or insert the index signal just in the same way.

When the index area signal M2 is formed from the switching signal RFSW, the timing of this index area signal M2 is selected to precede the timing of the index area signal of the signal S7. The reason for this is as follows. When an error exist in the tracks in the longitudinal direction of the tracks, the video signal, if erased, can not be recovered. While, in the case of the PCM data, the PCM data, even if erased little, can be recovered by the error correction or interpolation.

In the above mentioned embodiment, since the postamble signal has the frequency of 5.8 MHz which is the data of "1" so that the signal having the frequency of 2.9 MHz which is the data of "0" is used as the index signal. In this case, the index signal is not limited to such signal but may be a signal having a pattern which does not appear as a data.

Alternatively, it is possible to record a coding data which results from modulating a predetermined data by "1" and "0" as the index signal. If the coding is carried out as described above, it is possible to record as the index signal a data indicative of the starting point and the intermediate portion of a tune and other various kinds of data such as a tape speed, a time information and so on.

It is needless to say that the present invention is not limited to a case where the audio signal is pulse-code-modulated and recorded and/or reproduced but can be applied to all apparatus for recording and/or reproducing a PCM data.

The writing modes of the index signal according to this invention will be enumerated as follows.

1) Auto recording mode

When a PCM data (may contain a video data) is recorded on a normal blank tape, the index signal having a data length of several seconds from the starting point of the recording can be automatically recorded simultaneously.

2) After-recording mode

In synchronism with the rewriting mode for rewriting the PCM audio data recorded, that is, so-called after-recording mode, the index signal having a data length corresponding to several seconds from the starting point of the recording can be recorded automatically or manually.

3) Other mode

While the above mentioned recorded audio data is reproduced, only the index signal is written.

The system of the invention in which the index area pulse is obtained with reference to the block address is especially significant for the case of 3).

According to the present invention as set forth above, when the index signal is written in or erased from the rear portion of the track of the PCM data while this PCM signal is being reproduced, the area signal for the index signal is formed on the basis of the address data in the PCM signal so that even when the recording track is displaced in the longitudinal direction thereof by the skew, jitter, adjusting error and so on, the position always determined relative to the track of the PCM data can be specified as the area of the index signal. Accordingly, it is possible to remove a fear that the PCM data will be erased by the index signal when the track timing is displaced in the longitudinal direction of the tape.

**Claims**

1.  An apparatus for recording and/or reproducing an information signal comprised of at least an audio signal and an index signal for controlling a tape transportation (3T) on a recording medium (2) having a slant track (4A, 4B) format, comprising
    audio signal processing means (60) for converting an input audio signal (AUin) into a digital form in such a manner that the audio data for a predetermined data length are recorded at one data part on said recording medium (2),
    transducer means (31 to 35) connected to said audio signal processing means (60) for recording and/or reproducing said digitized audio signal and said index signal (Idx),
    index signal generating means (71) for generating an index signal having a predetermined frequency
    characterized in that
    - said audio data are grouped as a plurality of block units, each block unit of which has a block address (ADRS) for identifying the block number thereof;
    - said digitized audio signal is recorded at one part of a slant track (4A, 4B) and said index signal (Idx) is recorded at another part of said slant track (4A, 4B) on said recording medium (2), said another part being a successively scanned end part of said part;

- area signal generating means (38, 39, 80) supply said index signal (Idx), to said transducer means (31 to 35) to be recorded at said successive part (14-15; 24-25) which is defined in accordance with the decoded block address in said grouped audio data reproduced prior to said successively scanned end part on said recording medium (2).

2. The apparatus according to claim 1, characterized in, erasing signal generating means (72) for generating an erasing signal (Er), wherein said index signal (Idx) already recorded on said successive end part is erased in response to an output signal from said area signal generating means (35 to 39, 80).

3. The apparatus according to claim 2, characterized in that said erasing signal (Er) from said erasing signal generating means (72) is higher in frequency than said index signal (IDX).

4. The apparatus according to any one of claims 1 to 3, characterized in means (39) for recording said index or erasing signal (Idx, Er) on end parts of successive tracks (4A, 4B) over several seconds(GT).

5. The apparatus according to any one of claims 1 to 4, characterized in that, when an address data (ADR) of a pulse-code-modulated (PCM) signal is detected, an area specifying signal for said index signal (Idx) is formed on the basis of said address data (ADRS), while when said address data (ADRS) is not detected, said area specifying signal for said index signal is formed from a signal (RFSW) indicative of a rotary phase of said rotary head.

**Patentansprüche**

1. Gerät zum Aufnehmen und/oder Wiedergeben eines Informationssignals, das aus wenigstens einem Audiosignal und einem Indexsignal besteht, das zur Steuerung des Bandtransports (3T) eines in Schrägspuren (4A, 4B) formatierten Aufzeichnungsmediums (2) dient, wobei das Gerät aufweist:
  eine Audiosignal-Verarbeitungseinrichtung (60) zur Umwandlung eines Audio-Eingangssignals (AUin) in ein digitales Signal in der Weise, daß die Audiodaten für eine vorbestimmte Datenlänge auf dem Aufzeichnungsmedium (2) in einem Datenteil aufgezeichnet werden,
  mit der Audiosignal-Verarbeitungseinrichtung (60) verbundene Wandlermittel (31 bis 35) zur Aufzeichnung und/oder Wiedergabe des digitalisierten Audiosignals und des Indexsignals (Idx),
  und einen Indexsignalgenerator (71) zur Erzeugung eines Indexsignals mit vorbestimmter Frequenz,
  **dadurch gekennzeichnet**,
  - daß die Audiodaten in Form mehrerer Blockeinheiten gruppiert sind, die jeweils eine Blockadresse (ADRS) zur Identifizierung der Blocknummer enthalten,
  - daß das digitalisierte Audiosignal in einem Teil einer Schrägspur (4A, 4B) und das Indexsignal (Idx) in einem anderen Teil dieser Schrägspur (4A, 4B) auf dem Aufzeichnungsmedium (2) aufgezeichnet werden, wobei dieser andere Teil ein anschließend abgetasteter Endbereich des erstgenannten Teils ist,
  - und daß ein Bereichssignalgenerator (38, 39, 80) den genannten Wandlermitteln (31 bis 35) das Indexsignal (Idx) zuführt, das in dem genannten anschließend abgetasteten Teil (14-15; 24-25) aufzuzeichnen ist, der in Übereinstimmung mit der dekodierten Blockadresse in den gruppierten Audiodaten definiert ist, die vor dem nachfolgend abgetasteten Endbereich auf dem Aufzeichnungsmedium (2) wiedergegeben werden.

2. Gerät nach Anspruch 1, gekennzeichnet durch einen Löschsignalgenerator (72) zur Erzeugung eines Löschsignals (Er), wobei das in dem anschließend abgetasteten Endbereich bereits aufgezeichnete Indexsignal als Reaktion auf ein Ausgangssignal aus dem Bereichssignalgenerator (38, 39, 80) gelöscht wird.

3. Gerät nach Anspruch 2, dadurch gekennzeichnet, daß das aus dem Löschsignalgenerator (72) kommende Löschsignal (Er) eine höhere Frequenz hat als das Indexsignal (Idx).

4. Gerät nach einem der Ansprüche 1 bis 3, gekennzeichnet durch Mittel (39) zum Aufzeichnen des Index- oder Löschsignals (Idx, Er) in den Endbereichen aufeinanderfolgender Spuren (4A, 4B) über mehrere Sekunden (GT).

5. Gerät nach einem der Ansprüche 1 bis 4, dadurch gekennzeichnet, daß dann, wenn Adressendaten (ADRS) eines pulskodemodulierten (PCM)-Signals detektiert werden, ein Bereichsspezifizierungssignal für das Indexsignal (Idx) auf der Basis dieser Adressendaten (ADRS) gebildet wird, und daß dann, wenn die Adressendaten (ADRS) nicht detektiert werden, das Bereichsspezifizierungssignal für das Indexsignal aus einem Signal (RFSW) gebildet wird, das für die Drehwinkelphase des rotierenden Kopfes kennzeichnend ist.

**Revendications**

1. Un appareil pour l'enregistrement et/ou la reproduction d'un signal d'information qui comprend au moins un signal audio et un signal d'index destiné à commander le déplacement d'une bande (3T) sur un support d'enregistrement (2) ayant un format de pistes inclinées (4A, 4B), comprenant :

   des moyens de traitement de signal audio (60) destinés à convertir sous une forme numérique un signal audio d'entrée (AUin), d'une manière telle que les données audio correspondant à une longueur de données prédéterminée soient enregistrées dans une partie de données sur le support d'enregistrement (2),

   des moyens transducteurs (31 à 35) connectés aux moyens de traitement de signal audio (60) pour enregistrer et/ou reproduire le signal audio numérisé et le signal d'index (Idx),

   des moyens de génération de signal d'index (71) destinés à générer un signal d'index ayant une fréquence prédéterminée,

   caractérisé en ce que :

   - les données audio sont groupées sous la forme d'un ensemble de blocs, dans lequel chaque bloc a une adresse de bloc (ADRS) pour identifier son numéro de bloc;

   - le signal audio numérisé est enregistré sur une partie d'une piste inclinée (4A, 4B) et le signal d'index (Idx) est enregistré dans une autre partie de la piste inclinée (4A, 4B) sur le support d'enregistrement (2), cette autre partie étant une partie d'extrémité de la partie précitée, qui est balayée en succession;

   - des moyens de génération de signal de zone (38, 39, 80) appliquent le signal d'index (Idx) aux moyens transducteurs (31 à 35) pour qu'il soit enregistré dans la partie successive (14-15; 24-25) qui est définie conformément à l'adresse de bloc décodée dans les données audio groupées qui sont reproduites avant la partie d'extrémité balayée en succession sur le support d'enregistrement (2).

2. L'appareil selon la revendication 1, caractérisé par

   des moyens de génération de signal d'effacement (72) qui sont destinés à générer un signal d'effacement (Er), le signal d'index (Idx) qui est déjà enregistré sur la partie d'extrémité balayée en succession, étant effacé sous l'effet d'un signal de sortie provenant des moyens de génération de signal de zone (35 à 39, 80).

3. L'appareil selon la revendication 2, caractérisé en ce que le signal d'effacement (Er) provenant des moyens de génération de signal d'effacement (72) a une fréquence plus élevée que celle du signal d'index (Idx).

4. L'appareil selon l'une quelconque des revendications 1 à 3, caractérisé par des moyens (39) destinés à enregistrer le signal d'index ou d'effacement (Idx, Er) sur des parties d'extrémités de pistes successives (4A, 4B) pendant plusieurs secondes (GT).

5. L'appareil selon l'une quelconque des revendications 1 à 4, caractérisé en ce que, lorsque des données d'adresse (ADRS) d'un signal en modulation par impulsions et codage (MIC) sont détectées, un signal de spécification de zone pour le signal d'index (Idx) est formé sur la base des données d'adresse (ADRS), tandis que lorsque les données d'adresse (ADRS) ne sont pas détectées, le signal de spécification de zone pour le signal d'index est formé à partir d'un signal (RFSW) qui est représentatif d'une phase de rotation de la tête tournante.

F I G. 1

F I G. 2

F I G. 3

11

$F I G. 4$

FIG. 5

FIG. 6A

FIG. 6B

FIG. 6C  RFSW

FIG. 6D  SA

FIG. 6E  SI

EP 0 209 047 B1

## F I G. 7

*about 2.9 ms*

0 1 2 ······· ·····129 130 131

| SYNC | ADRS Q | W0 | W1 | W2 | W3 | P | W4 | W5 | W6 | W7 | CRCC |
|------|--------|----|----|----|----|----|----|----|----|----|------|
| 3 | 8 | 8 | 8 | 8 | 8 | 8 | 8 | 8 | 8 | 8 | 16 |

*1 Block*

FIG. 8

FIG. 9A    (S₁)

FIG. 9B    (S₁)
FIG. 9C    (S₂)
FIG. 9D    (S₃)
FIG. 9E    (S₄)
FIG. 9F    (S₅)
FIG. 9G    (S₆)
FIG. 9H    (S₇)
FIG. 9I (RFSW)
FIG. 9J (SD)
FIG. 9K (M₁)
FIG. 9L (M₂)

SYNC